# EUROPEAN PATENT APPLICATION

(11) **EP 3 174 249 A1**
(43) Date of publication of application: **31.05.2017**
(21) Application number: 16184991.4
(22) Date of filing: 19.08.2016
(51) Int. Cl.: H04L 12/26

(54) **NETWORK STATE INFORMATION PRESENTATION METHOD AND APPARATUS, COMPUTER PROGRAM AND RECORDING MEDIUM**

(30) Priority: 27.11.2015 CN 201510846057
(71) Applicant: Xiaomi Inc., Beijing 100085 (CN)
(72) Inventor: CHEN, Yong, Haidian District, Beijing 100085 (CN); CAO, Dingpeng, Haidian District, Beijing 100085 (CN); GUO, Hongwei, Haidian District, Beijing 100085 (CN)
(74) Representative: Reeve, Nicholas Edward

(57) **Abstract**

The present invention discloses a network state information presentation method and apparatus, a computer program and a recording medium, which pertain to the field of network technology. The method comprises: acquiring real-time bandwidth occupation information of bandwidth occupiers associated with a routing device, the bandwidth occupiers comprising one or more network services on the routing device and at least one electronic device accessing the routing device; generating network state information of the routing device, based on the real-time bandwidth occupation information of the bandwidth occupiers; and sending the network state information of the routing device to a designated device, so that the designated device presents the network state information.

## Description

### Technical Field

The present invention generally relates to the field of network technology, and more particularly, to a network state information presentation method and apparatus, computer program and a recording medium.

### Background

With the development of network technology, network coverage scenarios become diverse. In a house or a working place, a routing device is typically used as an accessing device, so that network activities can be performed via the routing device. However, during the use of the routing device, it is a common case that, although the maximum bandwidth of the routing device is 10M/s at a time, the actual usable bandwidth provided by the routing device often cannot reach 10M/s because there are many network activities on the routing device. As such, a user suffering from a low download speed cannot know the reason, resulting in low information transparency and making network usage unable to satisfy the user's actual demands. Therefore, there is an urgent need for a network state information method with high information transparency.

### SUMMARY OF THE INVENTION

The present invention provides a network state information presentation method and apparatus, a computer program and a recording medium.

According to a first aspect of the invention, there is provided a network state information presentation method. The method comprises: acquiring real-time bandwidth occupation information of each of bandwidth occupiers associated with a routing device, the bandwidth occupiers comprising one or more network services on the routing device and at least one electronic device accessing the routing device; generating network state information of the routing device, based on the real-time bandwidth occupation information of each bandwidth occupier; and sending the network state information of the routing device to a designated device, so that the designated device presents the network state information.
In a first possible implementation of the first aspect consistent with the first aspect, said generating the network state information of the routing device based on the real-time bandwidth occupation information of each bandwidth occupier comprises: for each bandwidth occupier, summing the real-time bandwidth occupation information of the bandwidth occupier to obtain network state information of the bandwidth occupier; and integrating the network state information of the bandwidth occupiers to obtain the network state information of the routing device.
In a second possible implementation of the first aspect consistent with any possible implementation of the first aspect, said acquiring the real-time bandwidth occupation information of each of the bandwidth occupiers associated with the routing device comprises: scanning each of the network services on the routing device to obtain real-time bandwidth information of the network service; and scanning a network port between the routing device and each of the at least one electronic device accessing the routing device to obtain real-time bandwidth information of the electronic device.
In a third possible implementation of the first aspect consistent with any possible implementation of the first aspect, said acquiring the real-time bandwidth occupation information of each of the bandwidth occupiers associated with the routing device comprises: acquiring the real-time bandwidth occupation information of each of the bandwidth occupiers associated with the routing device, when receiving a network state information acquiring request sent by the designated device; or acquiring the real-time bandwidth occupation information of each of the bandwidth occupiers associated with the routing device at a predetermined periodicity.
In a fourth possible implementation of the first aspect consistent with any possible implementation of the first aspect, after sending the network state information of the routing device to the designated device, the method further comprises: when receiving an adjusting instruction for any of the bandwidth occupiers, closing the bandwidth occupier.
In a fifth possible implementation of the first aspect consistent with any possible implementation of the first aspect, the real-time bandwidth occupation information indicates a sum of an upload speed and a download speed.

According to a second aspect of the invention, there is provided a network state information presentation method, comprising: receiving network state information of a routing device; and presenting the network state information of the routing device.
In a first possible implementation of the second aspect consistent with any possible implementation of the second aspect, said presenting the network state information of the routing device comprises: according to bandwidth occupiers in the network state information of the routing device, presenting network state information of each of the bandwidth occupiers respectively.
In a second possible implementation of the second aspect consistent with any possible implementation of the second aspect, the method further comprising: when presenting the network state information of the routing device, providing adjusting options for adjusting bandwidth occupations of bandwidth occupiers in the network state information; and when detecting a triggering operation on an adjusting option for any of the bandwidth occupiers, sending an adjusting instruction to the routing device to close the bandwidth occupier corresponding to the triggering operation.
In a third possible implementation of the second aspect consistent with any possible implementation of the second aspect, before receiving the network state information of the routing device, the method further comprises: sending a network state information acquiring request to the routing device, so that the routing device returns the network state information.

According to a third aspect of the invention, there is provided a network state information presentation apparatus, comprising: an acquiring module configured to acquire real-time bandwidth occupation information of each of bandwidth occupiers associated with a routing device, the bandwidth occupiers comprising one or more network services on the routing device and at least one electronic device accessing the routing device; a generating module configured to generate network state information of the routing device, based on the real-time bandwidth occupation information of each bandwidth occupier acquired by the acquiring module; and a sending module configured to send the network state information of the routing device generated by the generating module to a designated device, so that the designated device presents the network state information.
In a first possible implementation of the third aspect consistent with the third aspect, the generating module is configured to: for each bandwidth occupier, sum the real-time bandwidth occupation information of the bandwidth occupier to obtain network state information of the bandwidth occupier; and integrate the network state information of the bandwidth occupiers to obtain the network state information of the routing device.
In a second possible implementation of the third aspect consistent with any possible implementation of the third aspect, the acquiring module is configured to: scan each of the network services on the routing device to obtain real-time bandwidth information of the network service; and scan a network port between the routing device and each of the at least one electronic device accessing the routing device to obtain real-time bandwidth information of the electronic device.
In a third possible implementation of the third aspect consistent with any possible implementation of the third aspect, the acquiring module is configured to: acquire the real-time bandwidth occupation information of each of the bandwidth occupiers associated with the routing device, when a network state information acquiring request sent by the designated device is received; or acquire the real-time bandwidth occupation information of each of the bandwidth occupiers associated with the routing device at a predetermined periodicity.
In a fourth possible implementation of the third aspect consistent with any possible implementation of the third aspect, the apparatus further comprises: a processing module configured to close the bandwidth occupier when an adjusting instruction for any of the bandwidth occupiers is received.
In a fifth possible implementation of the third aspect consistent with any possible implementation of the third aspect, the real-time bandwidth occupation information indicates a sum of an upload speed and a download speed.

According to a fourth aspect of the invention, there is provided a network state information presentation apparatus, comprising: a receiving module configured to receive network state information of a routing device; and a presentation module configured to present the network state information of the routing device received by the receiving module.
In a first possible implementation of the fourth aspect consistent with the fourth aspect, the presentation module is configured to: according to bandwidth occupiers in the network state information of the routing device, present network state information of each of the bandwidth occupiers respectively.
In a second possible implementation of the fourth aspect consistent with any possible implementation of the fourth aspect, the apparatus further comprises: a providing module configured to provide adjusting options for adjusting bandwidth occupations of bandwidth occupiers in the network state information, when the network state information of the routing device received by the receiving module is presented; and a first sending module configured to, when a triggering operation on an adjusting option for any of the bandwidth occupiers is detected, send an adjusting instruction to the routing device to close the bandwidth occupier corresponding to the triggering operation.
In a third possible implementation of the fourth aspect consistent with any possible implementation of the fourth aspect, the apparatus further comprises: a second sending module configured to send a network state information acquiring request to the routing device, so that the routing device returns the network state information.

According to a fifth aspect of the invention, there is provided a network state information presentation apparatus, comprising: a processor; and a memory configured to store instructions executable by the processor. The processor is configured to: acquire real-time bandwidth occupation information of each of bandwidth occupiers associated with a routing device, the bandwidth occupiers comprising one or more network services on the routing device and at least one electronic device accessing the routing device; generate network state information of the routing device, based on the real-time bandwidth occupation information of each bandwidth occupier; and send the network state information of the routing device to a designated device, so that the designated device presents the network state information.

According to a sixth aspect of the invention, there is provided a network state information presentation apparatus, comprising: a processor; and a memory configured to store instructions executable by the processor. The processor is configured to: receive network state information of a routing device; and present the network state information of the routing device.

In one particular embodiment, the steps of the network state information presentation method are determined by computer program instructions.

Consequently, according to a seventh aspect, the invention is also directed to a computer program for executing the steps of a network state information presentation method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present invention may have the following advantageous effects.

By performing statistics on its actually occupied bandwidth, the routing device obtains network state information which characterizes real-time bandwidth occupation and provides the network state information to a terminal, making the network state transparent and avoiding misleading network users.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a network state information presentation method according to an exemplary embodiment;
Fig. 2 is a flow chart showing a network state information presentation method according to an exemplary embodiment;
Fig. 3A is a flow chart showing a network state information presentation method according to an exemplary embodiment;
Fig. 3B is a schematic diagram showing a network state information presentation page according to an exemplary embodiment;
Fig. 3C is a schematic diagram showing a network state information presentation page according to an exemplary embodiment;
Fig. 3D is a schematic diagram showing a network state information presentation page according to an exemplary embodiment;
Fig. 4 is a block diagram showing a network state information presentation apparatus according to an exemplary embodiment;
Fig. 5 is a block diagram showing a network state information presentation apparatus according to an exemplary embodiment;
Fig. 6 is a block diagram showing a network state information presentation apparatus 600 according to an exemplary embodiment;
Fig. 7 is a block diagram showing a network state information presentation apparatus 700 according to an exemplary embodiment.

### DETAILED DESCRIPTION

To make the objects, technical solutions and advantages of the present invention more clear, embodiments of the present invention will be described below in detail with reference to the accompanying drawings.

Reference will now be made in detail to exemplary embodiments, examples of which are illustrated in the accompanying drawings. The following description refers to the accompanying drawings in which the same numbers in different figures represent the same or similar elements unless otherwise indicated. The implementations set forth in the following embodiments do not represent all implementations consistent with the invention. Instead, they are merely examples of devices and methods consistent with aspects related to the invention as recited in the appended claims.

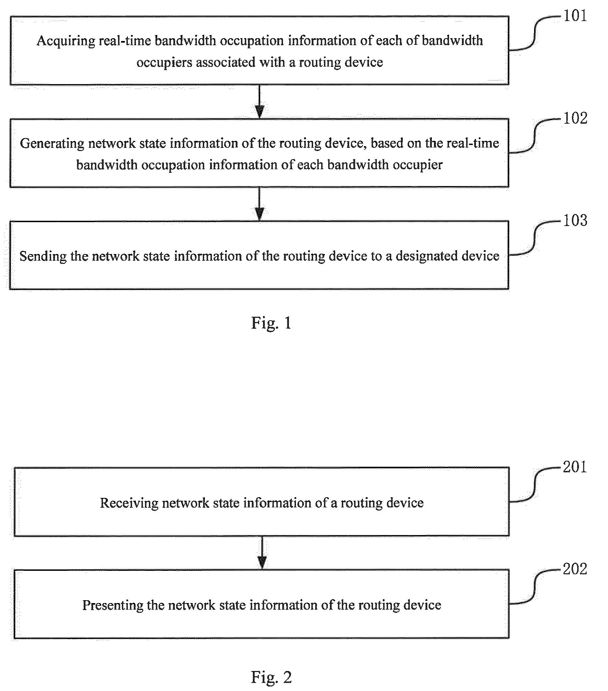

Fig. 1 is a flow chart showing a network state information presentation method. As shown in Fig. 1, the network state information presentation method is used in a routing device and comprises the following steps.
In step 101, real-time bandwidth occupation information of each of bandwidth occupiers associated with a routing device is acquired. The bandwidth occupiers comprise one or more network services on the routing device and at least one electronic device accessing the routing device.
In step 102, network state information of the routing device is generated based on the real-time bandwidth occupation information of each bandwidth occupier.
In step 103, the network state information of the routing device is sent to a designated device, so that the designated device presents the network state information.

In the method according to this embodiment, by performing statistics on its actually occupied bandwidth, the routing device obtains network state information which characterizes real-time bandwidth occupation and provides the network state information to a terminal, making the network state transparent and avoiding misleading network users.

In a possible implementation, said generating the network state information of the routing device based on the real-time bandwidth occupation information of each bandwidth occupier comprises: for each bandwidth occupier, summing the real-time bandwidth occupation information of the bandwidth occupier to obtain network state information of the bandwidth occupier; and integrating the network state information of the bandwidth occupiers to obtain the network state information of the routing device.

In a possible implementation, said acquiring the real-time bandwidth occupation information of each of the bandwidth occupiers associated with the routing device comprises: scanning each of the network services on the routing device to obtain real-time bandwidth information of the network service; and scanning a network port between the routing device and each of the at least one electronic device accessing the routing device to obtain real-time bandwidth information of the electronic device.

In a possible implementation, said acquiring the real-time bandwidth occupation information of each of the bandwidth occupiers associated with the routing device comprises: acquiring the real-time bandwidth occupation information of each of the bandwidth occupiers associated with the routing device, when receiving a network state information acquiring request sent by the designated device; or acquiring the real-time bandwidth occupation information of each of the bandwidth occupiers associated with the routing device at a predetermined periodicity.

In a possible implementation, after sending the network state information of the routing device to the designated device, the method further comprises: when receiving an adjusting instruction for any of the bandwidth occupiers, closing the bandwidth occupier.

In a possible implementation, the real-time bandwidth occupation information indicates a sum of an upload speed and a download speed.

All the above optional solutions may be combined in any manner to form an optional embodiment of the present invention, which will not be described here redundantly.

Fig. 2 is a flow chart showing a network state information presentation method according to an exemplary embodiment. As shown in Fig. 2, the network state information presentation method is used in an electronic device and comprises the following steps.
In step 201, network state information of a routing device is received.
In step 202, the network state information of the routing device is presented.

In the method according to this embodiment, by performing statistics on its actually occupied bandwidth, the routing device obtains network state information which characterizes real-time bandwidth occupation and provides the network state information to a terminal, making the network state transparent and avoiding misleading network users.

In a possible implementation, said presenting the network state information of the routing device comprises: according to bandwidth occupiers in the network state information of the routing device, presenting network state information of each of the bandwidth occupiers respectively.

In a possible implementation, the method further comprises: when presenting the network state information of the routing device, providing adjusting options for adjusting bandwidth occupations of bandwidth occupiers in the network state information; when detecting a triggering operation on an adjusting option for any of the bandwidth occupiers, sending an adjusting instruction to the routing device to close the bandwidth occupier corresponding to the triggering operation.

In a possible implementation, before receiving the network state information of the routing device, the method further comprises: sending a network state information acquiring request to the routing device, so that the routing device returns the network state information.

All the above optional solutions may be combined in any manner to form an optional embodiment of the present invention, which will not be described here redundantly.

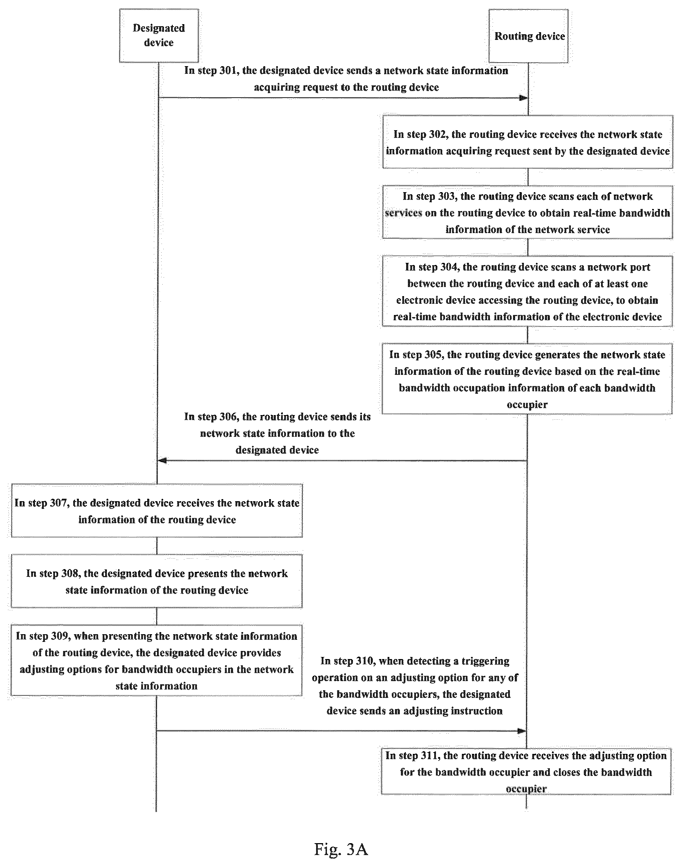

Fig. 3A is a flow chart showing a network state information presentation method according to an exemplary embodiment. As shown in Fig. 3A, the network state information presentation method is described by taking an example where a routing device interacts with a designated device and comprises the following steps.

In step 301, the designated device sends a network state information acquiring request to the routing device.

The designated device may be any kind of electronic device and may have an application for controlling the routing device installed thereon. By running the application and triggering a querying function of querying a current network state, a user can send a network state information acquiring request to the routing device.

In step 302, the routing device receives the network state information acquiring request sent by the designated device.

In the embodiment of the present invention, the designated device may be an electronic device accessing the routing device or an electronic device which is associated with the routing device but is not connected to a network via the routing device. The invention is not limiting in this regard.

In the embodiment of the present invention, description is given by taking only one example where the routing device is triggered by the network state information acquiring request sent by the designating device to perform step 303. However, in fact, this process may also be performed at a predetermined periodicity. As such, without introducing a designated device, network state information can be obtained periodically for monitoring the network state and network state abnormity can be detected in time.

In step 303, the routing device scans each of network services on the routing device to obtain real-time bandwidth information of the network service.

The routing device itself may be a server. By means of the network services on the routing device, network activities (such as downloading, uploading, synchronization with a cloud server and an electronic device, etc.) which are not limited by the embodiment of the present invention are performed. Therefore, network services installed on the routing device need to be detected in real time, in order to get knowledge of the real-time bandwidth information of each network service.

The real-time bandwidth information may refer to a sum of the current upload and download speeds. Of course, the real-time bandwidth information may comprise other information on bandwidth occupation, such as a bandwidth reserved for a network service.

In step 304, the routing device scans a network port between the routing device and each of at least one electronic device accessing the routing device, to obtain real-time bandwidth information of the electronic device.

The routing device may provide network accessing services to electronic devices. That is, each of the electronic devices can be connected to the network via a network port provided by the routing device. Therefore, network services accessing the routing device need to be detected in real time, in order to get knowledge of the real-time bandwidth information of each network service.

Real-time bandwidth information of an electronic device may refer to a sum of the current upload and download speeds of the electronic device.

Further, by way of the scanning, device information of the at least one electronic device, such as device name, etc., may also be obtained and provided to the designated device, in order for the designated device to get information on bandwidth occupation of each electronic device.

The above steps 303 and 304 constitute the process of acquiring real-time bandwidth occupation information of each of bandwidth occupiers associated with the routing device. Here, only network services on a routing device and electronic devices accessing the routing device are considered bandwidth occupiers. In practical use, there may also be other objects occupying the routing device's bandwidth, such as system treads. Therefore, other bandwidth occupying functions may also be obtained as bandwidth occupiers, to ensure accuracy of bandwidth information.

In step 305, the routing device generates the network state information of the routing device based on the real-time bandwidth occupation information of each bandwidth occupier.

For example, the step 305 may be implemented by: for each bandwidth occupier, summing the real-time bandwidth occupation information of the bandwidth occupier to obtain network state information of the bandwidth occupier; and integrating the network state information of the bandwidth occupiers to obtain the network state information of the routing device.

Because real-time bandwidth occupation information of a bandwidth occupier is used to characterize different functions of the bandwidth occupier (e.g., occupation of bandwidth by uploading or downloading), the real-time bandwidth occupation information of each bandwidth occupier needs to be summed to obtain the bandwidth occupied by the bandwidth occupier. For example, if a data transmission function has a real-time upload speed of 1 M/s and a real-time download speed of 2M/s, its network state information is 3M/s.

Said integrating the network state information of the bandwidth occupiers to obtain the network state information of the routing device may be generating a list of correspondences between bandwidth occupiers and respective network state information.

Of course, the integrating may also be generating a listing page, namely, a page containing a list of correspondences between bandwidth occupiers and respective network state information. The page may be displayed in a single-page display mode or a paging display mode, which will be described in detail in the following step 308.

In step 306, the routing device sends its network state information to the designated device.

In step 307, the designated device receives the network state information of the routing device.

The above steps 306 and 307 realize transmission of the network state information between the routing device and the designated device.

It shall be noted that the sending and the receiving may be based on any kind of network connection between the designated device and the routing device, such as NFC, Bluetooth, WiFi, etc., which are not limited by the present invention.

In step 308, the designated device presents the network state information of the routing device.

Said presenting may be single-page display or paging display. The single-page display refers to displaying bandwidth occupiers and respective network state information in one page.

For example, bandwidth occupiers and their respective network state information obtained currently are as follows:
Network service A, network state information 3M/s;
Network service B, network state information 1M/s;
Network service C, network state information 1.5M/s;
Electronic device D1, network state information 1M/s;
Electronic device D2, network state information 3M/s;
Electronic device D3, network state information 2M/s.

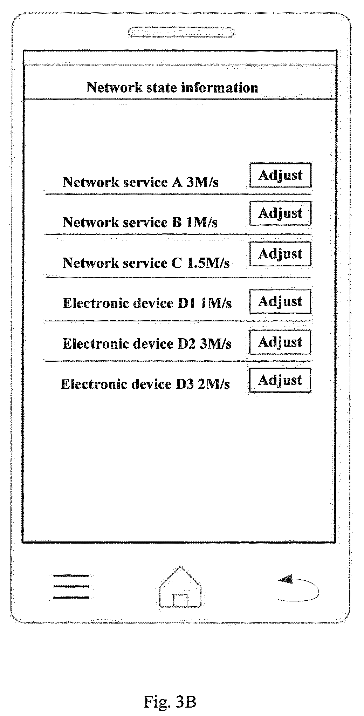

For the above contents, a page containing the list of correspondences may be generated, as shown in Fig. 3B.

On the other hand, the paging display may refer to first displaying different bandwidth occupier types and a sum of network state information for each bandwidth occupier type and, when a user's triggering operation on a certain type is detected, displaying bandwidth occupiers belonging to this type and their respective network state information. The different types may refer to a network service type and an electronic device type.

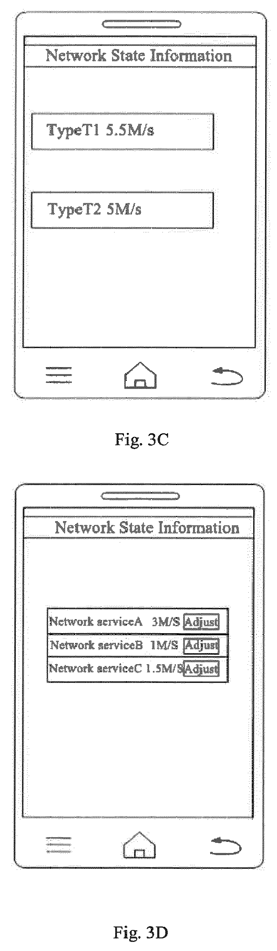

Referring still to the above example, pages for the paging display may be as shown in Figs. 3C and 3D. When a user's triggering operation on type T1 is detected, bandwidth occupiers belonging to the type T1 and their respective network state information can be displayed.

The above process realizes presentation of the network state information on the designated, enabling the user to view the current actual bandwidth occupation condition of the routing device intuitively and thus allowing a high information transparency. Further, to enable the user to perform more flexible controlling, the method may further comprise the following steps 308-311.

In step 309, when presenting the network state information of the routing device, the designated device provides adjusting options for adjusting bandwidth occupations of bandwidth occupiers in the network state information.

In step 310, when detecting a triggering operation on an adjusting option for any of the bandwidth occupiers, the designated device sends an adjusting instruction to the routing device to close the bandwidth occupier corresponding to the triggering operation.

The above page may further comprise adjusting options for bandwidth occupiers, as shown in Fig. 3B. The designated device having a right to control the routing device can have its current network usage demand satisfied by closing some bandwidth occupiers. Of course, the closing may not only refer to closing a network service but also to cutting off a connection between a network port and an electronic device.

In step 311, the routing device receives the adjusting option for the bandwidth occupier and closes the bandwidth occupier.

When receiving the adjusting option for the bandwidth occupier, the routing device may close the bandwidth occupier according to a closing manner set by itself.

It shall be noted that the closing manner set by the routing device may be temporary closing. That is, a closed network service can resume its network function under the instruction of the designated device. This embodiment is not limiting in this regard. Of course, the closing manner set by the routing device may also be closing based on priority, which is not limited by the embodiment of the present invention.

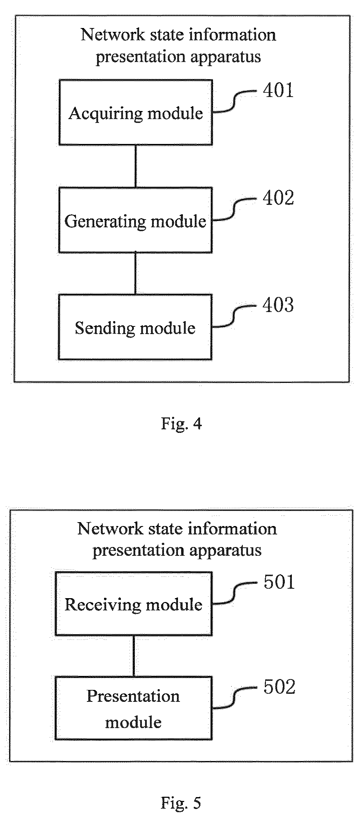

Fig. 4 is a block diagram showing a network state information presentation apparatus according to an exemplary embodiment. Referring to Fig. 4, the apparatus comprises an acquiring module 401, a generating module 402 and a sending module 403.

The acquiring module 401 is configured to acquire real-time bandwidth occupation information of each of bandwidth occupiers associated with a routing device, the bandwidth occupiers comprising one or more network services on the routing device and at least one electronic device accessing the routing device.

The generating module 402 is configured to generate network state information of the routing device, based on the real-time bandwidth occupation information of each bandwidth occupier acquired by the acquiring module 401.

The sending module 403 is configured to send the network state information of the routing device generated by the generating module to a designated device, so that the designated device presents the network state information.

In a possible implementation, the generating module 402 is configured to: for each bandwidth occupier, sum the real-time bandwidth occupation information of the bandwidth occupier to obtain network state information of the bandwidth occupier; and integrate the network state information of the bandwidth occupiers to obtain the network state information of the routing device.

In a possible implementation, the acquiring module 401 is configured to: scan each of the network services on the routing device to obtain real-time bandwidth information of the network service; scan a network port between the routing device and each of the at least one electronic device accessing the routing device to obtain real-time bandwidth information of the electronic device.

In a possible implementation, the acquiring module 401 is configured to: acquire the real-time bandwidth occupation information of each of the bandwidth occupiers associated with the routing device, when a network state information acquiring request sent by the designated device is received; or acquire the real-time bandwidth occupation information of each of the bandwidth occupiers associated with the routing device at a predetermined periodicity.

In a possible implementation, the apparatus further comprises: a processing module configured to close the bandwidth occupier when an adjusting instruction for any of the bandwidth occupiers is received.

In a possible implementation, the real-time bandwidth occupation information indicates a sum of an upload speed and a download speed.

Fig. 5 is a block diagram showing a network state information presentation apparatus according to an exemplary embodiment. Referring to Fig. 5, the apparatus comprises the following modules.

A receiving module 501 is configured to receive network state information of a routing device.

A presentation module 502 is configured to present the network state information of the routing device received by the receiving module.

In a possible implementation, the presentation module is configured to: according to bandwidth occupiers in the network state information of the routing device, present network state information of each of the bandwidth occupiers respectively.

In a possible implementation, the apparatus further comprises: a providing module configured to provide adjusting options for adjusting bandwidth occupations of bandwidth occupiers in the network state information, when the network state information of the routing device received by the receiving module is presented; a first sending module configured to, when a triggering operation on an adjusting option for any of the bandwidth occupiers is detected, send an adjusting instruction to the routing device to close the bandwidth occupier corresponding to the triggering operation.

In a possible implementation, the apparatus further comprises: a second sending module configured to send a network state information acquiring request to the routing device, so that the routing device returns the network state information.

Detailed operations performed by modules of the apparatus in the above embodiments have been described in related method embodiments, and will not be described here in detail any more.

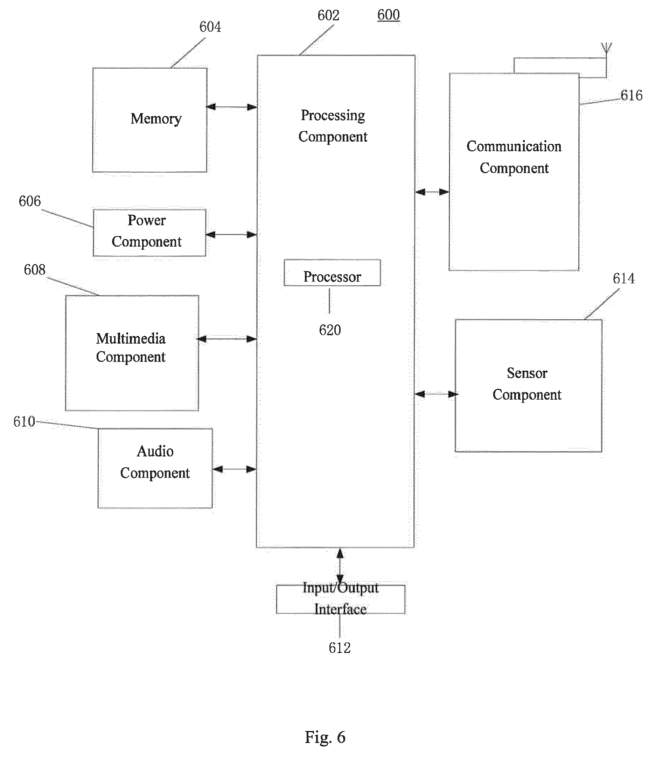

Fig. 6 is a block diagram showing a network state information presentation apparatus 600 according to an exemplary embodiment. For example, the apparatus 600 may be a mobile phone, a computer, a digital broadcast terminal, a messaging device, a gaming console, a tablet, a medical device, exercise equipment, a personal digital assistant or the like.

Referring to Fig. 6, the apparatus 600 may include one or more of the following components: a processing component 602, a memory 604, a power component 606, a multimedia component 608, an audio component 610, an input/output (I/O) interface 612, a sensor component 614 and a communication component 616.

The processing component 602 generally controls the overall operations of the apparatus 600, for example, display, phone call, data communication, camera operation and record operation. The processing component 602 may include one or more processors 620 to implement an instruction to complete all or part of the steps of the above methods. In addition, the processing component 602 may include one or more modules to facilitate the interaction between the processing component 602 and other components. For example, the processing component 602 may include a multimedia module to facilitate the interaction between the processing component 608 and the processing component 602.

The memory 604 is configured to store various types of data to support the operation performed on the device 600. The examples of such data include an instruction of any application program or method, contact data, address book data, massages, pictures, videos, etc. which are operated on the device 600. The memory 604 may be realized with any kind of a volatile and non-volatile storage device or combination thereof, for example, Static Random Access Memory (SRAM), Electrically-Erasable Programmable Read Only Memory (EEPROM), Erasable Programmable Read Only Memory (EPROM), Programmable Read Only Memory (PROM), Read Only Memory (ROM), a magnetic memory, a flash memory, a magnetic disk or an optical disk.

The power component 606 provides power for various components of the apparatus 600. The power component 606 may include a power supply management system, one or more power supplies, and other components for generating, managing and distributing power to the apparatus 600.

The multimedia component 608 includes a screen providing an output interface between the apparatus 600 and the user. In some embodiments, the screen may include a Liquid Crystal Display (LCD) and a Touch Panel (TP). If the screen includes the touch panel, the screen may be realized as a touch screen to receive an input information from the user. The touch panel includes one or more touch sensors to sense the touching, sliding and the gestures on the touch panel. The touch sensor may not only sense the touching or border of sliding gesture but only detect the duration time and pressure related to touching or sliding operation. In some embodiments, the multimedia component 608 includes one front-facing camera and/or one rear-facing camera. When the apparatus 600 is in an operation mode, for example, a shooting mode or a video mode, the front-facing camera and/or the rear-facing camera may receive outside multimedia data. Each one of front-facing camera and rear-facing camera may be one fixed optical lens system or have focal length or optical zoom ability.

The audio component 610 is configured to output and/or input audio information. For example, the audio component 610 includes one microphone (MIC). When the apparatus 600 is in the operation mode, for example, a calling mode, a record mode and a speech recognition mode, the microphone is configured to receive outside audio information. The received audio information may be further stored in the memory 604 or sent via the communication component 616. In some embodiments, the audio component 610 includes may include a speaker configured to output audio information.

The I/O interface 612 provides an interface between the processing component 602 and a peripheral interface module. The above peripheral interface module may be a keyboard, a click wheel, and button, etc. The button may include but not limit to home page button, volume button, start button and lock button.

The sensor component 614 includes one or more sensors and is configured to provide various aspects of the assessment state for the apparatus 600. For example, the sensor component 614 may detect the on/off state of the apparatus 600, the relative positioning of the components (for example, the components are display and a keypad of the apparatus 600), position change of the apparatus 600 or one component of the apparatus 600, presence or absence of the touch between the user and the apparatus 600, as well as the orientation or acceleration/deceleration and temperature change of the apparatus 600. The sensor component 614 may include a proximity sensor configured to detect the presence of an adjacent object when there is not any physical contact. The sensor component 614 may also include an optical sensor (such as CMOS or a CCD image sensor) configured to be used in imaging application. In some embodiments, the sensor component 614 may also include an acceleration sensor, a gyro sensor, a magnetic sensor, a pressure sensor or a temperature sensor.

The communication component 616 is configured to facilitate the wired or wireless communication between the apparatus 600 and other apparatuses. The apparatus 600 may access the wireless network based on a communication standard, such as WiFi, 2G or 3G, or a combination thereof. In one exemplary embodiment, the communication component 616 receives a broadcast information or broadcast associated information from an external broadcast management system via a broadcast channel. In one exemplary embodiment, the communication component 616 also includes a Near Field Communication (NFC) module to facilitate short-range communication. For example, the NFC module may be based on Radio Frequency Identification (RFID) technology, Infrared Data Association (IrDA) technology, Ultra-Wideband (UWB) technology, Bluetooth (BT) technology and other technologies.

In an exemplary embodiment, the apparatus 600 may be realized through one or more Application Specific Integrated Circuits (ASIC), a Digital Signal Processor (DSP), a Digital Signal Processing Device (DSPD), a Programmable Logic Device (PLD), a Field Programmable Gate Array (FPGA), a controller, a microcontroller, a microprocessor, or other electronic elements, and configured to carry out the aforementioned methods.

In an exemplary embodiment, a non-transitory computer-readable storage medium comprising the instruction is also provided, for example, the memory 604 including the instruction. The above instruction may be carried out by the processor 620 of the apparatus 600 to perform the above methods. For example, the non-transitory computer-readable storage medium may be a ROM, a random access memory (RAM), a CD-ROM, a magnetic tape, a floppy disk, an optical data storage devices and the like.

In an embodiment, there is also provided a non-transitory computer-readable storage medium having stored therein instructions that, when executed by a processor of a mobile terminal, cause the mobile terminal to perform the network state information presentation method performed by an electronic device as shown in Fig. 2 or 3.

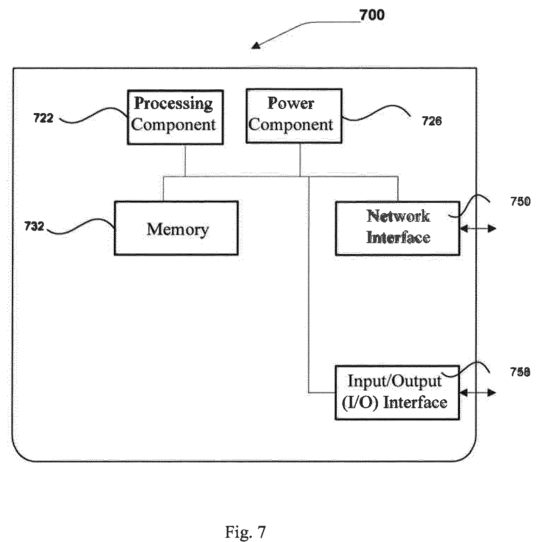

Fig. 7 is a block diagram showing a network state information presentation apparatus 700 according to an exemplary embodiment. For example, the apparatus 700 may be provided as a router. Referring to Fig. 7, the server 700 includes a processing component 722 which further includes one or more processors, and memory resources that a memory 732 represents for storing instructions executable by the processing component 722, e.g., applications. The applications stored in the memory 732 may include one or more modules each corresponding to a set of instructions. In addition, the processing component 722 is configured to execute instructions, so as to perform the network state information presentation method performed by a routing device as shown in Fig. 1 or 3.

The apparatus 700 may further include a power component 726 configured to perform power management for the apparatus 700, a wired or wireless network interface 750 configured to connect the apparatus 700 to a network, and an input/output (I/O) interface 758. The apparatus 700 can be operated based on an operating system stored in the memory 732, e.g., Windows ServerTM, Mac OS XTM, UnixTM, LinuxTM, FreeBSDTM or the like.

Those skilled in the art may easily conceive other embodiments of the invention from consideration of the specification and practice of the present invention. This application is intended to cover any variations, uses, or adaptations of the invention following the general principles thereof and including such departures from the present invention as come within known or customary practice in the art.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A network state information presentation method, comprising:
acquiring (S101) real-time bandwidth occupation information of each of bandwidth occupiers associated with a routing device, the bandwidth occupiers comprising one or more network services on the routing device and at least one electronic device accessing the routing device;
generating (S102) network state information of the routing device, based on the real-time bandwidth occupation information of each bandwidth occupier; and
sending (S103) the network state information of the routing device to a designated device, so that the designated device presents the network state information.

2. The method according to claim 1, wherein said generating the network state information of the routing device based on the real-time bandwidth occupation information of each bandwidth occupier comprises:
for each bandwidth occupier, summing the real-time bandwidth occupation information of the bandwidth occupier to obtain network state information of the bandwidth occupier; and
integrating the network state information of the bandwidth occupiers to obtain the network state information of the routing device.

3. The method according to claim 1 or 2, wherein said acquiring the real-time bandwidth occupation information of each of the bandwidth occupiers associated with the routing device comprises:
scanning each of the network services on the routing device to obtain real-time bandwidth information of the network service;
scanning a network port between the routing device and each of the at least one electronic device accessing the routing device to obtain real-time bandwidth information of the electronic device.

4. The method according to claim 1, 2 or 3, wherein said acquiring the real-time bandwidth occupation information of each of the bandwidth occupiers associated with the routing device comprises:
acquiring the real-time bandwidth occupation information of each of the bandwidth occupiers associated with the routing device, when receiving a network state information acquiring request sent by the designated device; or
acquiring the real-time bandwidth occupation information of each of the bandwidth occupiers associated with the routing device at a predetermined periodicity.

5. The method according to any preceding claim, wherein after sending the network state information of the routing device to the designated device, the method further comprises:
when receiving an adjusting instruction for any of the bandwidth occupiers, closing the bandwidth occupier.

6. A network state information presentation method, comprising:
receiving (S201) network state information of a routing device;
presenting (S202) the network state information of the routing device.

7. The method according to claim 6, wherein said presenting the network state information of the routing device comprises:
according to bandwidth occupiers in the network state information of the routing device, presenting network state information of each of the bandwidth occupiers respectively.

8. The method according to claim 6, further comprising:
when presenting the network state information of the routing device, providing adjusting options for adjusting bandwidth occupations of bandwidth occupiers in the network state information;
when detecting a triggering operation on an adjusting option for any of the bandwidth occupiers, sending an adjusting instruction to the routing device to close the bandwidth occupier corresponding to the triggering operation.

9. The method according to claim 6, wherein before receiving the network state information of the routing device, the method further comprises:
sending a network state information acquiring request to the routing device, so that the routing device returns the network state information.

10. A network state information presentation apparatus, comprising:
an acquiring module (401) configured to acquire real-time bandwidth occupation information of each of bandwidth occupiers associated with a routing device, the bandwidth occupiers comprising one or more network services on the routing device and at least one electronic device accessing the routing device;
a generating module (402) configured to generate network state information of the routing device, based on the real-time bandwidth occupation information of each bandwidth occupier acquired by the acquiring module; and
a sending module (403) configured to send the network state information of the routing device generated by the generating module to a designated device, so that the designated device presents the network state information.

11. A network state information presentation apparatus, comprising:
a receiving module (501) configured to receive network state information of a routing device;
a presentation module (502) configured to present the network state information of the routing device received by the receiving module.

12. A network state information presentation apparatus, comprising:
a processor (620);
a memory (604) configured to store instructions executable by the processor,
wherein the processor (620) is configured to
acquire real-time bandwidth occupation information of each of bandwidth occupiers
associated with a routing device, the bandwidth occupiers comprising one or more network services on the routing device and at least one electronic device accessing the routing device;
generate network state information of the routing device, based on the real-time bandwidth occupation information of each bandwidth occupier; and
send the network state information of the routing device to a designated device, so that the designated device presents the network state information.

13. A network state information presentation apparatus, comprising:
a processor (722);
a memory (732) configured to store instructions executable by the processor,
wherein the processor (722) is configured to
receive network state information of a routing device;
present the network state information of the routing device.

14. A computer program including instructions for executing the steps of a network state information presentation method according to any one of claims 1 to 6, when said program is executed by a computer.

15. A recording medium readable by a computer and having recorded thereon a computer program including instructions for executing the steps of a network state information presentation method according to any one of claims 1 to 6.
